# EUROPÄISCHE PATENTSCHRIFT

(11) **EP 0 770 038 B1**
(45) Veröffentlichungstag und Bekanntmachung des Hinweises auf die Patenterteilung: **20.01.1999**
(21) Anmeldenummer: 95924855.0
(22) Anmeldetag: 07.07.1995
(51) Int. Cl.: C02F 1/32, C02F 9/00

(54) **GERÄT ZUR TRINKWASSERAUFBEREITUNG ZUM ORTSVERÄNDERLICHEN EINSATZ**
TRANSPORTABLE DEVICE FOR PREPARING DRINKING WATER
APPAREIL PORTATIF PERMETTANT DE PREPARER DE L'EAU POTABLE

(30) Priorität: 09.07.1994 DE 4424256
(43) Veröffentlichungstag der Anmeldung: 02.05.1997
(73) Patentinhaber: SCHROTT, Harald, D-88131 Lindau (DE); Zucholl, Klaus, 68199 Mannheim (DE)
(72) Erfinder: ZUCHOLL, Klaus, D-68199 Mannheim (DE)
(74) Vertreter: Patentanwälte Eisele, Otten & Roth
(86) Internationale Anmeldenummer: DE9500919
(87) Internationale Veröffentlichungsnummer: WO9601790

(56) Entgegenhaltungen:
- DE-A- 4 228 860
- DE-U- 9 301 688
- DE-U- 9 302 722
- FR-A- 2 515 655
- GB-A- 2 271 106
- US-A- 5 106 512

## Beschreibung

Die Erfindung betrifft ein Gerät zur Trinkwasseraufbereitung zum ortsveränderlichen Einsatz mit einer auswechselbaren Filterpatrone, einer ultraviolettes Licht (UV) abstrahlenden Lampe, einem Rohwasserbehälter und einem Reinwasserbehälter, wobei in den Rohrwasserbehälter eingefülltes Wasser unter Schwerkraftwirkung durch die Filterpatrone in den Reinwasserbehälter läuft.

Solche Tisch- oder Reisegeräte dienen je nach dem verwendeten Filter zur Reinigung des Wassers von Geruchs- und Geschmacksstoffen, sonstigen Verunreinigungen sowie vorhandenen Mikroorganismen. Als Filtermaterialien werden insbesondere Aktivkohle, Ionenaustauscher, Zeolithe oder Molekularsiebe eingesetzt. Die UV-Bestrahlung bewirkt die Entkeimung.

Ein Gerät dieser Art ist aus der britischen Patentanmeldung 2 271 106 bekannt. Dieses ist jedoch ziemlich unhandlich beim Transport und hat eine unzureichende Verfahrenssteuerung und damit einen hohen Stromverbrauch, so daß ein Betrieb mit handelsüblichen Batterien nicht in Betracht kommt. Die UV-Lampe liegt unter dem Reinwasserbehälter und strahlt durch ein Quarzfenster im Boden des Behälters von unten in diesen hinein. Ein derartiger eingesetzter Glasboden kann undicht werden und wirft hygienische Probleme auf. Wegen der Strahlungsrichtung der Lampe nach oben sind besondere Sicherheitsvorkehrungen erforderlich um zu vermeiden, daR der Benutzer in die Lampe sieht und dadurch an den Augen Schaden nehmen kann.

Der Erfindung liegt die Aufgabe zugrunde, ein kleines, kompaktes und batteriegetriebenes Gerät zu schaffen, das gegen Augenschäden beim Benutzer besser geschützt ist.

Diese Aufgabe wird ausgehend von einem Gerät zur Trinkwasseraufbereitung der einleitend bezeichneten Art erfindungsgemäß dadurch gelöst, daß die UV-Lampe über dem oben offen ausgebildeten Reinwasserbehälter angeordnet ist und unmittelbar in diesen hineinstrahlt. Somit ist es nicht mehr erforderlich, mit Hilfe beweglicher oder verändlicher Abschirmungen zu arbeiten, weil die Lampe nach unten strahlt und nach oben bleibend abgedeckt sein kann. Es kann ein einfacher Behälter aus prinzipiell jedem Werkstoff verwendet werden, wobei die Strahlungswirkung erheblich verbessert werden kann, wenn die Innenflächen des Behälters das ultraviolette Licht reflektieren. Da es von besonderer Bedeutung ist, nicht nur das gefilterte Wasser im Behälter, sondern auch den Filterauslauf und die letzten dort hängenden Wassertropfen zu entkeimen, wird vorgeschlagen, daß die Filterpatrone im Bezug auf die UV-Lampe so angebracht und ausgebildet ist, daß ihr den wasserauslauf bildendes unteres Sieb im Strahlungsbereich der UV-Lampe liegt.

Die Anordnung der Lampe über dem Reinwasserbehälter bietet außerdem ganz neue Möglichkeiten der konstruktiven Gestaltung im Hinblick auf ein geringes Gesamtvolumen beim Transport. In dieser Hinsicht wird vorgeschlagen, daß die UV-Lampe, die Filterpatrone und elektrische Komponenten zum Betrieb der UV-Lampe und ggf. zur Steuerung und Überwachung des Gerätes in einer Baueinheit vereinigt sind, die im Betrieb auf dem Reinwasserbehälter aufsitzt und an ihrer Oberseite den Rohwasserbehälter trägt. Bei einer solchen Anordnung können nämlich die beiden Behälter abgenommen werden, so daß es sinnvoll ist, sie ineinandersteckbar auszubilden. Außerdem wird vorgeschlagen, daß der Rohwasserbehälter von der Baueinheit abnehmbar ausgebilde ist und dazu an seinem Boden ein selbstschließendes Ventil ausweist, das beim Aufsetzen auf die Baueinheit öffnet. Somit besteht das Gerät im wesentlichen aus drei Teilen, wobei eine weitere Verbesserung darin bestehen kann, daß die Baueinheit in einen der beiden Behälter wenigstens teilweise einfügbar ausgebildet ist.

Im Ergebnis kann somit das Volumen des gesamten Gerätes nahezu auf das Volumen des Reinwasserbehälters zurückgeführt werden, was bei der Reise von großem Vorteil ist.

Erfahrungsgemäß neigen UV-Lampen dazu, durch Verschmutzung des Lichtaustrittsfensters in ihrer desinfizierenden Wirkung nachzulassen. Es wird deshalb vorgeschlagen, einen lichtempfindlichen Sensor zur Überwachung einzusetzen. Er kann, wie anhand des Beispiels beschrieben, zusätzlich dazu herangezogen werden, das richtige Aufsetzen der Baueinheit auf den Reinwasserbehälter zu überwachen.

Da im Interesse geringstmöglichen Energieverbrauchs darauf zu achten ist, daß die UV-Lampe nur so kurz wie möglich eingeschaltet wird, muß andererseits auch sichergestellt sein, daß die Lampe erst eingeschaltet wird, wenn alles Wasser durch den Filter gelaufen ist. Zur Lösung dieses Problems wird vorgeschlagen, daß das Vorhandensein von Wasser im Rohwasserbehälter durch Leitfähigkeitsmessung zu dem Zweck erfaßt wird, die Aufbereitungsvorgänge zu zählen und/oder zu starten. Das Gerät wartet also ab, bis sich kein Wasser mehr im Rohwasserbehälter befindet und gibt die Lampe erst danach frei.

Eine andere vorteilhafte Weiterbildung der Erfindung besteht darin, sicher zu stellen, daß das Gerät nicht mit einer verbrauchten und im schlimmsten Fall verkeimten Filterpatrone betrieben werden kann. Es werden deshalb Maßnahmen vorgeschlagen, um die Filterkapazität zu überwachen. Dazu sind Eingabeorgane zur Eingabe der Rohwasserqualität und/oder der Art der eingesetzten Filterpatrone und/oder des Zeitpunkts des Filterwechsels vorgesehen und außerdem eine Rechenanordnung, um auf der Grundlage der eingegebenen Daten und der Zahl der Aufbereitungsvorgänge die Filterkapazität zu überwachen und bei Erschöpfung des Filters abzuschalten bzw. diesen Zustand eindeutig kenntlich zu machen.

Ausführungsbeispiele der Erfindung werden nachfolgend anhand der Zeichnung erläutert.

Im einzelnen zeigt
- Fig. 1: ein schematisches Schnittbild eines Tischgeräts zur Trinkwasseraufbereitung;
- Fig. 2: eine Ansicht dieses Gerätes im raumsparenden Transportzustand in kleinerem Maßstab;
- Fig. 3: ein schematisches Schnittbild eines anderen Tischgeräts zur Trinkwasseraufbereitung;
- Fig. 4: eine Außenansicht eines weiteren Geräts zur Trinkwasseraufbereitung im Betriebszustand, in kleinerem Maßstab;
- Fig. 5: das Gerät nach Figur 4 im zusammengefügten Transportzustand und
- Fig. 6: den Reinwasserbehälter des Geräts nach Figur 4 mit Deckel als Vorratsbehälter.

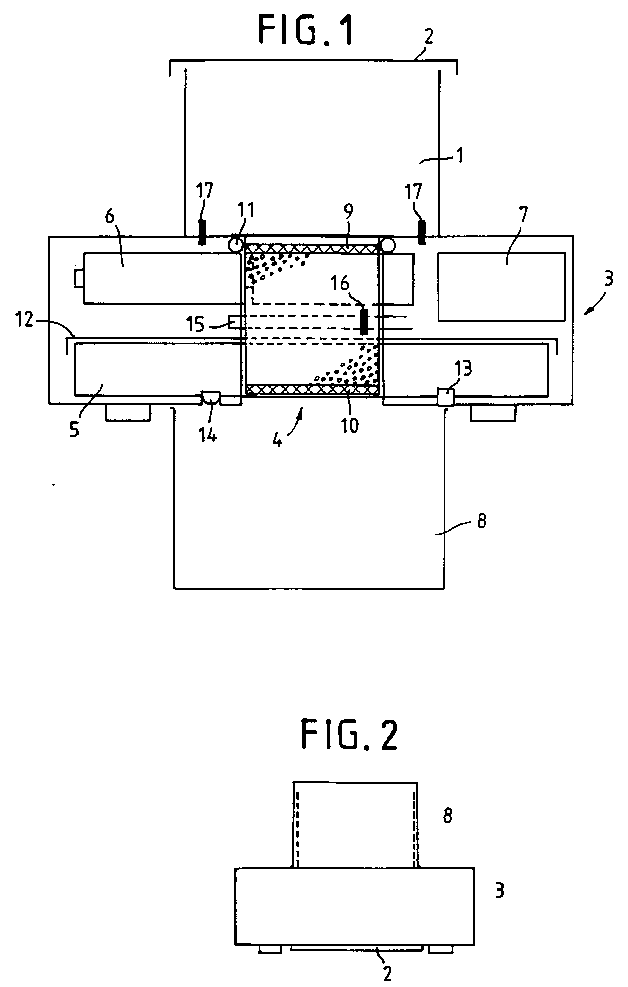

Das Gerät nach Fig. 1 umfaßt im wesentlichen einen Rohwasserbehälter 1 mit Deckel 2 zur Aufnahme des aufzubereitenden Wassers. Unter dem Rohwasserbehälter befindet sich eine Baugruppe, die insgesamt als Technikteil 3 bezeichnet wird und eine auswechselbare Filterpatrone 4, eine stabförmige UV-Lampe 5, Batterien 6 zur Stromversorgung sowie ein Elektronikteil 7 zur Steuerung der Gerätefunktionen und zur Spannungswandlung für die UV-Lampe 5 enthält. Das Technikteil 3 ist auf den Rand eines oben offenen Reinwasserbehälters 8 aufgesetzt. Dieser Reinwasserbehälter besteht aus einem ultraviolettes Licht reflektierenden undurchsichtigen Werkstoff, vorzugsweise Alluminium oder Edelstahl. Er kann aber auch aus einem geeigneten Kunststoff gefertigt und zumindest innen oberflächenbeschichtet sein.

Die Filterpatrone 4 hat einen hülsenförmigen Gehäusemantel, der an beiden Enden mit porösen Filterplatten 9, 10 verschlossen ist. Diese bestehen zum Beispiel aus Kunststoff oder Keramik und sind zur Hemmung des Keimwachstums vorzugsweise mit Silberzusätzen versehen. Die Filterpatrone 4 ist mit einem geeigneten, vorzugsweise granulierten Filtermaterial, zum Beispiel gesilberter Aktivkohle, gefüllt. Sie ist, durch einen Dichtring 11 abgedichtet, in einen Durchbruch des Rohwasserbehälterbodens eingesetzt, so daß das Wasser einlaufen kann. Die untere Filterplatte 10, durch welche das Wasser ausläuft, befindet sich über dem Reinwasserbehälter 8.

Die UV-Lampe 5 sendet ein Keime abtötendes ultraviolettes Licht aus, das durch einen vorzugsweise aus Alluminium bestehenden Lichtreflektor 12 ausschließlich nach unten abgestrahlt wird. Infolge der reflektierenden Innenoberfläche des Reinwasserbehälters 8 erreicht dieses Licht aber auch die Unterseite der Filterpatrone, so daß auch die Filterplatte 10 und das darin verbleibende Wasser entkeimt wird.

Zur Vermeidung einer Falschbedienung und zur Sicherstellung der richtigen Funktion des Geräts sind folgende Maßnahmen getroffen. In dem Technikteil 3 ist ein Mikroschalter 13 eingebaut, der bei richtigem Zusammenfügen des Technikteils 3 mit dem Reinwasserbehälter 8 die Inbetriebnahme des Geräts ermöglicht beziehungsweise im gegenteiligen Fall die Inbetriebnahme verhindert und womöglich zusätzlich ein Warnsignal auslöst. Die Verschmutzung der UV-Lampe 5 wird durch einen lichtempfindlichen Sensor 14 überwacht. Dieser sitzt an der Unterseite des Technikteils innerhalb des Reinwasserbehälters. Er ist nach oben zur UV-Lampe hin abgedunkelt und erfaßt nur das vom Reinwasserbehälter reflektierte UV-Licht. Das bei Verschmutzung der Lampe verringerte Sensorsignal führt zu deren Abschaltung. Andererseits kann derselbe Sensor 14 auch dazu dienen, zusätzlich das Aufsetzen des Technikteils 3 auf den Reinwasserbehälter 8 zu überwachen. Bei aufgesetztem Technikteil erhält der Sensor kein Umgebungslicht mehr. Nur von diesem völlig abgedunkelten Zustand ausgehend, gibt er die UV-Lampe 5 zur Einschaltung frei. Eine Drahtspule 15 erkennt induktiv das Vorhandensein einer für das Gerät geeigneten Filterpatrone. An dieser ist hierfür ein Metallstreifen 16 als Kennmarke angebracht.

Zur Verfahrenssteuerung dienen in diesem Beispiel zunächst einmal zwei Elektroden 17, die in den Boden des Rohwasserbehälters 1 hineinragen. Sie sind an eine Leitfähigkeit-Meßanordnung angeschlossen und ermöglichen die selbsttätige Erkennung von im Rohwasserbehälter 1 vorhandenem Wasser. Weiter besteht über die Drahtspule 15 die Möglichkeit, induktiv die Leitfähigkeit in der Filterpatrone 4 zu messen. Die Leitfähigkeit der Aktivkohlefüllung ist vom Wassergehalt in der Filterpatrone abhängig.

Der Betriebsablauf bei der Wasseraufbereitung ist etwa wie folgt. Gießt man Wasser in den Rohwasserbehälter 1, so wird infolge des nun meßbaren Widerstandes zwischen den Elektroden 17 die elektronische Steueranordnung des Geräts aktiviert. Das Gerät wartet zunächst ab, bis alles Wasser durch die Filterpatrone 4 gelaufen ist. Dann wird die UV-Lampe 5 für etwa 10 bis 60 Sekunden eingeschaltet. Diese Zeit reicht im Normalfall aus, um die im Wasser enthaltenen Mikroorganismen abzutöten. Wie erwähnt, wird auch die Unterseite der Filterpatrone 4 bestrahlt. Nach der Entkeimung des Wassers wird der Benutzer durch eine optische oder akustische Signalisierung informiert. Dann schaltet das Gerät in Bereitschaftsstellung.

Zur Raumersparnis beim Transport kann der Reinwasserbehälter 8 über den Rohwasserbehälter 1 gestülpt werden. Dessen Deckel 2 verschließt in diesem Fall die Unterseite des Technikteils 3 (Fig. 2).

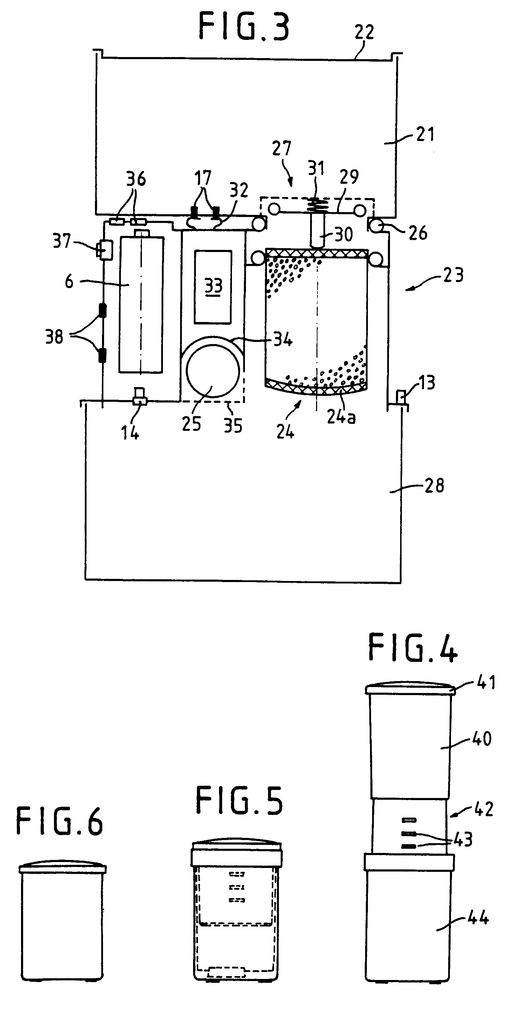

Fig. 3 zeigt eine weitere Ausgestaltung eines erfindungsgemäßen Geräts. Der wesentliche Unterschied zum Ausführungsbeispiel nach Fig. 1 besteht darin, daß ein abnehmbarer Rohwasserbehälter 21 mit Deckel 22 und eine UV-Lampe 25 vorgesehen ist, welche den Grundriß der Behälter nicht überragt, so daß alles Licht in den hier ebenfalls abnehmbaren Reinwasserbehälter 28 fällt.

Um den Rohwasserbehälter 21 abnehmbar zu machen, ist er durch Dichtringe 26 zum Technikteil 23 hin abgedichtet und in seinem Boden ist ein schematisch angedeutetes Rückschlagventil 27 eingebaut. Dieses öffnet beim Aufsetzen des Rohwasserbehälters auf das Technikteil selbsttätig. Dazu besteht das Ventil im einzelnen aus einem Ventilteller 29 mit Randdichtung, einem Stift 30 zum Öffnen und einem gestrichelt eingezeichneten Haltewinkel, an dem sich eine Feder 31 abstützt. Ebenfalls wegen der Abnehmbarkeit des Rohwasserbehälters erfolgt die Kontaktierung der schon im vorhergehenden Beispiel erwähnten Elektroden 17 über Blattfederkontakte 32.

Die Stromversorgung erfolgt auch hier über Batterien 6 und die elektronische Steuerung ist in einem Elektronikteil 33 zusammengefaßt. Die Filterpatrone 24 sitzt exzentrisch im Technikteil 23 und ist teilweise umschlossen von der UV-Lampe 25. Über der Lampe befindet sich ein Lichtreflektor 34 und unterhalb der Lampe ein UV-durchlässiges Fenster 35, vorzugsweise aus Quarzglas. Die untere Filterplatte 24 a der Filterpatrone ist nach außen gewölbt, um den Anteil der direkt auftreffenden Strahlung zu vergrößern.

Wesentlich ist, daß der Technikteil 23 so kompakt gebaut ist, daß er den Rohwasserbehälter 21 seitlich nicht überragt, sondern zum Transport in diesen eingesteckt werden kann. Der Technikteil 23 wird dazu umgedreht und darauf kommt der Deckel 22. Sodann kann der Rohwasserbehälter 21 samt Technikteil in den Reinwasserbehälter 28 eingefügt werden.

Als mögliche Alternativen für eine ähnlich kompakte Bauform ist noch zu erwähnen, daß die Filterpatrone höher als die UV-Lampe angeordnet sein könnte, um die direkte Strahlung auf die Filterunterseite wesentlich zu steigern. Auch könnte die Filterpatrone so ausgebildet sein, daß sie mit ihrem unteren Teil die Lampe gabelförmig umschließt.

Wie im vorherigen Beispiel sind auch hier zur Vermeidung von Fehlbedienungen und zur Feststellung einer Verschmutzung des Quarzfensters 35 ein Mikroschalter 13 und ein lichtempfindlicher Sensor 14 vorgesehen. Darüberhinaus wird bei diesem Gerät die Kapazität der Filterpatrone überwacht. Dazu sind an der Oberseite des Technikteils, die nur bei abgenommenem Rohwasserbehälter 21 zugänglich ist, zwei Wahlschalter 36 angebracht. Hier ist einerseits die Art der eingesetzten Filterpatrone einzustellen (zum Beispiel nitratselektiver Filter) und andererseits der Verschmutzungsgrad des Rohwassers (zum Beispiel sehr hoch/hoch/mittel). Zur Inbetriebsetzung bzw. zur Eingabe von Befehlen an die Steuerelektronik ist eine Taste 37 vorgesehen. Schließlich geben Leuchtdioden 38 den augenblicklichen Betriebszustand des Geräts wieder. Das Gerät ermittelt auf der Grundlage der durchgelaufenen Wasserfüllungen und unter Berücksichtigung der Einstellwerte an den Wahlschaltern 36 die noch vorhandene Kapazität der Filterpatrone. Ist diese erschöpft oder ist aufgrund einer langen Betriebsunterbrechung (zum Beispiel von 4 Wochen) eine Verkeimung des Filters nicht auszuschließen, so wird dies dem Benutzer signalisiert.

Der Betriebsablauf gestaltet sich bei dem Gerät nach Fig. 3 wie folgt. Hat der Benutzer eine neue Filterpatrone 24 in das Gerät eingefügt, so stellt er die Art der Patrone und den Verschmutzungsgrad des Wassers an den Wahlschaltern 36 ein. Sodann signalisiert er dem Gerät durch eine lange Betätigung der Taste 37 den erfolgten Filterwechsel. Daraufhin werden geräteintern die Fehler für die Kapazitätsüberwachung und die Uhr des im Elektronikteil 33 enthaltenen Mikrokontrollers zurückgesetzt, womit die Errechnung der Filterkapazität beginnt.

Nun gießt der Benutzer Wasser zur Aufbereitung in den Rohwassertank 21 und drückt kurz auf die Taste 27, um den Aufbereitungsvorgang zu starten. Alternativ kann dieser Start auch selbsttätig mittels der Leitwertmessung mit Hilfe der Elektroden 17 erfolgen. Wenn alles Wasser durchgelaufen ist, wird die Lampe eine erforderliche Zeit lang eingeschaltet und das Wasser dadurch entkeimt. Durch wechselnde Signalzustände der Leuchtdioden 38 wird der Benutzer über den aktuellen Betriebszustand informiert.

Nach erfolgter Aufbereitung wird geräteintern ein Kapazitätszähler um die Menge des filtrierten Wassers multipliziert mit dem Schadstoffgehalt erhöht. Bei Erreichen der Kapazitätsgrenze oder einer bestimmten Filterbenutzungsdauer wird der Benutzer optisch und/oder akustisch zu einem Filterwechsel aufgefordert.

Die Figuren 4 bis 6 geben ein Beispiel eines praktisch ausgeführten Geräts zur Trinkwasseraufbereitung mit einer veränderten Behälterform, jedoch prinzipiell den gleichen Bestandteilen wie bei Fig. 3. Es sind dies ein Rohwasserbehälter 40 mit Deckel 41, ein Technikteil 42, an welchem Anzeige- oder Bedienelemente 43 erkennbar sind, und einem Reinwasserbehälter 44. Fig. 4 zeigt dieses Gerät betriebsfertig aufgebaut und Fig. 5 im zusammengefügten Transportzustand. Der Deckel 41 ist so ausgebildet, daß er die hier oben befindliche Unterseite des Technikteils 42 und dadurch auch beide Behälter abdeckt. Fig. 6 soll andeuten, daR der Reinwasserbehälter 44 mit dem Deckel auch für sich als Aufbewahrungsgefäß benutzt werden kann.
- 1: Rohwasserbehälter
- 2: Deckel
- 3: Technikteil
- 4: Filterpatrone
- 5: UV-Lampe
- 6: Batterie
- 7: Elektronikteil
- 8: Reinwasserbehälter
- 9: Filterplatte
- 10: Filterplatte
- 11: Dichtring
- 12: Lichtreflektor
- 13: Mikroschalter
- 14: Sensor
- 15: Drahtspule
- 16: Metallstreifen
- 17: Elektrode
- 21: Rohwasserbehälter
- 22: Deckel
- 23: Technikteil
- 24: Filterpatrone
- 24a: Filterplatte
- 25: UV-Lampe
- 26: Dichtung
- 27: Rückschlagventil
- 28: Reinwasserbehälter
- 29: Ventilteller
- 30: Stift
- 31: Feder
- 32: Blattfederkontakt
- 33: Elektronikteil
- 34: Lichtreflektor
- 35: Fenster
- 36: Wahlschalter
- 37: Taste
- 38: Leuchtdioden

## Patentansprüche

1. Gerät zur Trinkwasseraufbereitung zum ortsveränderlichen Einsatz mit einer auswechselbaren Filterpatrone (24), einer ultraviolettes Licht (UV) abstrahlenden Lampe (25), einem Rohwasserbehälter (21) und einem Reinwasserbehälter (28), wobei in den Rohwasserbehälter (21) eingefülltes Wasser unter Schwerkraftwirkung durch die Filterpatrone (24) in den Reinwasserbehälter (28) läuft, dadurch gekennzeichnet, daß die UV-Lampe (25) über dem oben offen ausgebildeten Reinwasserbehälter (28) angeordnet ist und unmittelbar in diesen hineinstrahlt.

2. Gerät nach Anspruch 1, dadurch gekennzeichnet, daß die Filterpatrone (24) in Bezug auf die UV-Lampe (25) so angebracht und ausgebildet ist, daß ihr den Wasserauslauf bildendes unteres Sieb (24a) im Strahlungsbereich der UV-Lampe liegt.

3. Gerät nach Anspruch 1, dadurch gekennzeichnet, daß die UV-Lampe (25), die Filterpatrone (24) und elektrische Komponenten (33) zum Betrieb der UV-Lampe und gegebenenfalls zur Steuerung und Überwachung des Gerätes in einer Baueinheit (23) vereinigt sind, die im Betrieb auf dem Reinwasserbehälter (28) aufsitzt und an ihrer Oberseite den Rohwasserbehälter (21) trägt.

4. Gerät nach Anspruch 1, dadurch gekennzeichnet, daß die beiden Behälter (21, 28) ineinander steckbar ausgebildet sind.

5. Gerät nach Anspruch 3, dadurch gekennzeichnet, daß der Rohwasserbehälter (21) von der Baueinheit (23) abnehmbar ausgebildet ist und dazu an seinem Boden ein selbstschließendes Ventil (27) aufweist, das beim Aufsetzen auf die Baueinheit (23) öffnet.

6. Gerät nach Anspruch 5, dadurch gekennzeichnet, daß die Baueinheit (23) in einen der beiden Behälter (21, 28) wenigstens teilweise einfügbar ausgebildet ist.

7. Gerät nach Anspruch 5, dadurch gekennzeichnet, daß die Baueinheit (23) in den Rohwasserbehälter (21) und beide Teile zusammen in den Reinwasserbehälter (28) einsteckbar sind und mit einem Deckel (22) verschlossen werden können.

8. Gerät nach Anspruch 1, dadurch gekennzeichnet, daß ein lichtempfindlicher Sensor (14) zur Überwachung der Wirksamkeit der UV-Lampe (25) vorgesehen ist.

9. Vorrichtung nach Anspruch 1, dadurch gekennzeichnet, daß das Vorhandensein von Wasser im Rohwasserbehälter (21) durch Leitfähigkeitsmessung zu dem Zweck erfaßt wird, die Aufbereitungsvorgänge zu zählen und/oder zu starten.

10. Gerät nach Anspruch 1, dadurch gekennzeichnet, daß Eingabeorgane (36) zur Eingabe der Rohwasserqualität und/oder der Art der eingesetzten Filterpatrone und/oder des Zeitpunkts des Filterwechsels und eine Rechenanordnung vorgesehen ist, um auf der Grundlage der eingegebenen Daten und der Zahl der Aufbereitungsvorgänge die Filterkapazität zu überwachen.

## Claims

1. Device for purifying drinking water for portable use with a replaceable filter cartridge (24), a lamp (25) radiating ultraviolet light (UV), an untreated water container (21) and a purified water container (28), in which water filled into the untreated water container (21) flows by gravity through the filter cartridge (24) into the purified water container (28), characterised in that the UV lamp (25) is arranged above the purified water container (28) designed with an open top and radiates directly into the latter.

2. Device according to claim 1, characterised in that the filter cartridge (24) is attached and designed with respect to the UV lamp (25) so that its bottom screen (24a) forming the water outlet lies within the radiation range of the UV lamp.

3. Device according to claim 1, characterised in that the UV lamp (25), the filter cartridge (24) and electrical components (33) for driving the UV-lamp and if necessary for controlling and monitoring the device are combined into one component (23), which in operation sits on the purified water container (28) and on its upper side bears the untreated water container (21).

4. Device according to claim 1, characterised in that the two containers (21, 28) can be designed to be inserted into one another.

5. Device according to claim 3, characterised in that the untreated water container (21) is designed to be removable from the component (23), and in addition on its base has a self-closing valve (27) which opens on fitting onto the component (23).

6. Device according to claim 5, characterised in that the component (23) is designed to be at least partly fitted into one of the two containers (21, 28).

7. Device according to claim 5, characterised in that the component (23) can be inserted into the untreated water container (21) and both parts together can be fitted into the purified water container (28) and can be closed by a lid (22).

8. Device according to claim 1, characterised in that a light-sensitive sensor (14) is provided for monitoring the effectiveness of the UV lamp (25).

9. Device according to claim 1, characterised in that the presence of water in the untreated water container (21) is detected by conductivity measurement for the purpose of counting and/or starting the purification processes.

10. Device according to claim 1, characterised in that input elements (36) for entering the untreated water quality and/or the type of filter cartridge fitted and/or the time of the filter change and a computer are provided in order to monitor the filter capacity on the basis of the entered data and the number of purification processes.

## Revendications

1. Appareil pour la préparation d'eau potable pour une utilisation en différents lieux, comportant une cartouche de filtre interchangeable (24), une lampe (25) rayonnant de la lumière ultraviolette (UV), un récipient d'eau brute (21) et un récipient d'eau pure (28), l'eau contenue dans le récipient d'eau brute (21) s'écoulant, sous l'action de la gravité, à travers la cartouche de filtre (24) dans le récipient d'eau pure (28), caractérisé en ce que la lampe UV (25) est agencée au-dessus du récipient d'eau pure (28) réalisé en étant ouvert en haut et rayonne directement dans celui-ci.

2. Appareil selon la revendication 1,
caractérisé en ce que la cartouche de filtre (24) est agencée et réalisée, relativement à la lampe UV (25), de sorte que son filtre inférieur (24a) formant la sortie d'eau se trouve dans la zone de rayonnement de la lampe UV.

3. Appareil selon la revendication 1,
caractérisé en ce que la lampe UV (25), la cartouche de filtre (24) et des composants électriques (33) pour faire fonctionner la lampe UV et, le cas échéant, pour commander et surveiller l'appareil sont réunis en une unité constructive (23), qui se trouve, en service, sur le récipient d'eau pure (28) et porte, sur sa face supérieure, le récipient d'eau brute (21).

4. Appareil selon la revendication 1,
caractérisé en ce que les deux récipients (21, 28) sont réalisés en pouvant être emboîtés l'un dans l'autre.

5. Appareil selon la revendication 3,
caractérisé en ce que le récipient d'eau brute (21) est réalisé en pouvant être retiré de l'unité constructive (23) et, pour cela, présente, sur son fond, une valve (27) fermant automatiquement, qui s'ouvre lors de la mise en place sur l'unité constructive (23).

6. Appareil selon la revendication 5,
caractérisé en ce que l'unité constructive (23) est réalisée en pouvant être introduite au moins partiellement dans un des deux récipients (21, 28).

7. Appareil selon la revendication 5,
caractérisé en ce que l'unité constructive (23) peut être emboîtée dans le récipient d'eau brute (21) et les deux pièces ensemble dans le récipient d'eau pure (28), et elles peuvent être fermées par un couvercle (22).

8. Appareil selon la revendication 1,
caractérisé en ce qu'un capteur (14), sensible à la lumière, pour surveiller l'efficacité de la lampe UV (25), est prévu.

9. Dispositif selon la revendication 1,
caractérisé en ce que la présence d'eau dans le récipient d'eau brute (21) est détectée par mesure de conductibilité dans le but de compter et/ou de démarrer les processus de préparation.

10. Appareil selon la revendication 1,
caractérisé en ce que des organes d'entrée (36) pour entrer la qualité de l'eau brute et/ou le type de la cartouche de filtre utilisée et/ou le moment du changement du filtre et un agencement de calcul sont prévus, pour surveiller, sur la base des données entrées et du nombre des processus de préparation, la capacité du filtre.
